# EUROPÄISCHE PATENTANMELDUNG

(11) **EP 2 522 416 A1**
(43) Veröffentlichungstag der Anmeldung: **14.11.2012**
(21) Anmeldenummer: 11165759.9
(22) Anmeldetag: 11.05.2011
(51) Int. Cl.: B01D 47/10, B03B 9/06

(54) **Vorrichtung zur Reinigung von Abluft aus industriellen Schredderanlagen**

(71) Anmelder: Metso Lindemann GmbH, 40231 Düsseldorf (DE)
(72) Erfinder: Köhl, Erich, 40667 Meerbusch (DE); Van der Beek, August, 41515 Grevenbroich (DE)
(74) Vertreter: Becker, Thomas

(57) **Zusammenfassung**

Die Erfindung betrifft eine Vorrichtung zur Reinigung von Abluft aus industriellen Schredderanlagen.

## Beschreibung

Die Erfindung betrifft eine Vorrichtung zur Reinigung von Abluft aus industriellen Schredderanlagen.

Für die Aufbereitung von Reststoffen wie Metallschrott werden große industrielle Schredderanlagen eingesetzt.

Aus Umweltgründen gehören zu solchen Schredderanlagen regelmäßig Zusatzausrüstungen um beispielsweise Staubemissionen, aber auch Emissionen durch Fette, Öle, Kraftstoffe etc. so gering wie möglich zu halten. Die technische Anleitung Luft (TA Luft) gibt Emissionsgrenzwerte vor.

Es ist versucht worden, Schadstoffe in der Abluft über eine Nachverbrennung zu minimieren. Ebenso sind Elektrofilter, biologische Filter oder Aktivkohlefilter eingesetzt worden.

Für Zerkleinerungsanlagen (Schredder) der genannten Art existiert bis heute jedoch keine technisch und wirtschaftlich zufrieden stellende Lösung.

Dies gilt nicht nur für feste, insbesondere feinteilige Bestandteile in der Abluft, sondern auch für flüssige oder gasförmige Schadstoffe, beispielsweise Kohlenwasserstoffe.

Die DE 195 20 399 C2 betrifft ein Verfahren und eine Einrichtung zur Aufbereitung von Abwässern aus Nassentstaubungsanlagen von industriellen Schreddern. Dabei wird das Waschwasser der Nassentstaubungsanlage in eine Flotationsanlage geführt. Sedimentierte Feststoffe werden in einem nachgeschalteten Sammelbecken aufgefangen und anschließend entwässert. Die dabei anfallende Flüssigkeit wird in die Nassentstaubungsanlage zurückgeführt, ebenso wie das Flotatwasser der Flotation.

Mit der bekannten Anlage wird eine wichtige Teilreinigung der Schredder-Abluft erreicht. Sie ist jedoch nicht geeignet, feinstteilige Feststoffe (Partikelgrößen auch <1µm, bis in den nm-Bereich) sowie gasförmige und flüssige Schadstoffe aus dem Waschwasser in ausreichendem Maße zu entfernen.

Der Erfindung liegt deshalb die Aufgabe zu Grunde, eine Vorrichtung zur Reinigung von Abluft aus industriellen Schredderanlagen anzubieten, die gegenüber dem Stand der Technik einen höheren Abscheidungsgrad von Schadstoffen aus der Abluft erlaubt. Der Begriff "Schredderanlagen" inkludiert auch zugehörige Anlagenteile wie Sichter.

Dabei geht die Erfindung zunächst von der in der DE 195 20 399 C2 offenbarten Technologie aus, die Abluft einer Nassentstaubungsanlage zuzuführen. Dort wird die mit den Schadstoffen beladene Abluft mit einer Waschflüssigkeit in Kontakt gebracht. Die Schadstoffe werden in der Waschflüssigkeit absorbiert, adsorbiert und/oder abgeschieden und überwiegend mit der Waschflüssigkeit abgeführt.

Ein wichtiger Fortschritt der erfindungsgemäßen Lösung liegt darin, in die Vorrichtung zur Reinigung von Abluft aus industriellen Schredderanlagen eine Anlage zur Druckentspannungsflotation zu integrieren. Dazu wird die aus der Nassentstaubung entnommene, verbrauchte Waschflüssigkeit in die Anlage zur Druckentspannungsflotation überführt und dort weiter aufbereitet.

Bei der Druckentspannungsflotation wird diese Waschflüssigkeit bei einem Überdruck mit Luft gesättigt und über Entspannungsarmaturen anschließend in ein reguläres Flotationsbecken überführt.

Bei der Aufbereitung des Waschwassers mit einer Entspannungsflotation können Kohlenwasserstoffe (VOC's) in allen Aggregatzuständen (fest, flüssig, gasförmig) gebunden werden, die anschließend über die feinperlig verteilte Luft im Flotationsbecken aufsteigen und sich als Agglomerat auf Grund ihrer geringen Dichte im Oberflächenbereich der Flotationsflüssigkeit ansammeln, wo sie anschließend abgesaugt oder abgeräumt werden können.

Für eine Optimierung der Druckentspannungsflotation ist eine hohe Luftsättigung des Waschwassers und des Druckwassers wesentlich. Durch einen Überdruck des Druckwassers von beispielsweise 3 bis 8 bar und anschließende Entspannung lässt sich ein äußerst feinteiliges Gasblasenspektrum erzielen, wodurch die Anlagerung von Luftblasen an die flüssigen und/oder gasförmigen Kohlenwasserstoffe gefördert wird.

In umfangreichen Versuchen hat sich herausgestellt, das Kohlenwasserstoffe (Kohlenwasserstoffverbindungen) in fester, flüssiger und gasförmiger Phase auf diese Weise aus der Waschflüssigkeit abgeschieden werden können, wobei die Abscheideleistung Werte bis 85 % der Gesamtbelastung an Kohlenwasserstoffen und anderen Schadstoffen beträgt.

In ihrer allgemeinsten Ausführungsform betrifft die Erfindung eine Vorrichtung zur Reinigung von Abluft aus industriellen Schredderanlagen, mit folgenden Merkmalen:
- einer Nassentstaubungsanlage zur Kontaktierung der mit Schadstoffen beladenen Abluft mit einer Waschflüssigkeit,
- einer Anlage zur Druckentspannungsflotation,
- einer Einrichtung zur Überleitung der aus der Nassentstaubungsanlage anfallenden, verbrauchten Waschflüssigkeit in die Anlage zur Druckentspannungsflotation.

Zwischen die Nassentstaubungsanlage und die Druckentspannungsflotation kann ein Sedimentationsbecken geschaltet werden, durch das die Waschflüssigkeit geleitet wird, um (weitere) festen Schadstoffe vor der Flotationsstufe abzutrennen.

Ebenso kann nur ein Teilstrom der verbrauchten Waschflüssigkeit direkt von der Nassentstaubungsanlage (dem Nasswäscher) zur Druckentspannungsflotation gepumpt werden, während ein anderer Teilstrom der Waschflüssigkeit (des Absorbens) durch das Sedimentationsbecken geführt wird.

Die Vorrichtung kann durch verschiedene Maßnahmen, die einzeln, aber auch in beliebigen Kombinationen realisiert werden können (soweit diese Kombinationen nicht ausdrücklich ausgeschlossen sind), optimiert werden. Entsprechende Merkmale sind Gegenstand der Beschreibung, der Ansprüche und der Figuren. Angaben wie "vor", "nach" etc. beziehen sich, soweit nicht anders angegeben, auf den normalen, typischen Prozessablauf, also insbesondere auf die Strömungsrichtung der Abluft bzw. der Waschflüssigkeit.

Dazu gehört, die Nassentstaubungsanlage als Venturi-Wäscher mit einer oder mehreren Venturi-Stufen auszubilden.

Die Nasssentstaubungsanlage kann dazu wie folgt gestaltet sein:
- mit einer ersten Venturi-Stufe, durch die die Abluft des Schredders und/oder eines zugehörigen Sichters (in dem Leicht- und Schwergut getrennt wird) geführt wird. Vor und/oder entlang der Venturi-Stufe (Venturi-Düse) ist mindestens eine Einrichtung angeordnet, um die Waschflüssigkeit in den Abluftstrom zu leiten. Die Venturi-Stufe kann eine oder mehrere Venturi-Kehlen aufweisen.
- Hinter der ersten Venturi-Stufe kann eine zweite Venturi-Stufe angeordnet werden. Beide können baugleich sein.
- Der Querschnitt jeder Venturi-Stufe ist vorzugsweise einstellbar, um die Luftgeschwindigkeit anpassen zu können. Nach einer Variante ist die Venturikehle der 2. Stufe schmaler als die der ersten Stufe.
- Eine Alternative sieht vor, mindestens eine Stufe, beispielsweise die zweite Stufe, entsprechend der Lehre der DE 4331301 C2 auszubilden, also mit einem hinter der Venturikehle angeordneten Verdrängungskörper, der verschiebbar gelagert sein kann. Die Zufuhr der Waschflüssigkeit erfolgt wieder vor und/oder entlang der Venturi-Stufe, zentral (in Mittenlängsrichtung der Abluftströmung) oder von gegenüberliegenden Seiten der Venturi-Düse.
- Die Waschflüssigkeit kann Frischwasser oder Flotatwasser aus der Druckentspannungsflotation sein.
- Ein Frischwasseranteil erhöht den Wirkungsgrad der Abscheidung und kann gleichzeitig Flüssigkeitsverluste entlang der GesamtVorrichtung ausgleichen.
- Eine Variante sieht vor, in der ersten Venturi-Stufe Flotatwasser und in der zweiten Venturi-Stufe anteilig oder ausschließlich Frischwasser einzusetzen.
- Die Waschflüssigkeit kann beispielsweise über Düsen, Sprenkler oder andere Verteiler in den Abluftstrom eingespeist werden. Es ist vorteilhaft, wenn die Flüssigkeit über eine Sprühvorrichtung in die Nassentstaubungsanlage eingeleitet (eingedüst) wird. Durch das Versprühen der Waschflüssigkeit wird eine hohe Kontaktoberfläche zwischen Waschflüssigkeit und Abluft erreicht und damit ein höherer Abscheidegrad von Schadstoffen.
- Das Massenverhältnis der Waschflüssigkeit 1. zu 2. Venturi-Stufe beträgt beispielsweise 25:1 bis 1:1 oder 15:1 bis 5:1.
- Den nass arbeitenden Reinigungsstufen ist mindestens eine Abluftleitung nachgeschaltet, entlang der die gereinigte Abluft aus der Anlage weggeführt wird, zum Beispiel über einen Kamin in die Atmosphäre.
- Die verbrauchte, mit Schadstoffen angereicherte Waschflüssigkeit wird aus der Nassentstaubungsanlage in nachgeordnet Vorrichtungsteile geleitet.

Um Flotatwasser aus der Anlage zur Druckentspannungsflotation zurück zur Nassentstaubungsanlage zu führen ist mindestens eine entsprechende Leitung vorzusehen. Analog gilt das für die Einleitung von unverbrauchter Waschflüssigkeit in die Nassentstaubungsanlage.

Auf Grund der optimierten Reinigungsleistung der Anlage zur Druckentspannungsflotation ist das Flotatwasser nahezu schadstofffrei, wenn es als (gereinigtes) Waschwasser zurück zur Nassentstaubungsanlage geführt wird.

Bei dieser Maßnahme wird vermieden, dass sich auf Grund einer Kreislaufführung des Waschwassers Schadstoffe aufkonzentrieren und damit die Reinigungsleistung der Gesamtvorrichtung geschwächt wird, wie dies im Stand der Technik oft der Fall ist.

Bei der Anlage zur Druckentspannungsflotation kommt es zwangsläufig im Bereich des Flüssigkeitsspiegels zur Ansammlung separierter Schadstoffe (beispielsweise Kohlenwasserstoffe), die durch zusätzliche Maßnahmen einer Nachreinigung unterworfen werden können.

Durch die Anlage zur Druckentspannungsflotation wird erreicht, dass sich feste, flüssige und/oder gasförmige Schadstoffe als Agglomerat im Oberflächenbereich der Flüssigkeit im Flotationsbecken ansammeln.

Entsprechend sieht eine weitere Ausführungsform der Erfindung vor, die Anlage zur Druckentspannungsflotation mit einer mechanischen Einrichtung zur Entfernung dieses Agglomerats auszubilden. Solche mechanischen Einrichtungen, beispielsweise Rechen, sind als solche bekannt und werden deshalb hier nicht weiter erläutert.

Bezüglich der insbesondere in Schlammform anfallenden Sedimente im Sedimentationsbecken und/oder der Anlage zur Druckentspannungsflotation können entsprechende Einrichtungen zur Entfernung dieser schlammförmigen Bestandteile vorgesehen werden. Sie können im Weiteren, insbesondere nach einer Entwässerung, entweder direkt deponiert oder einer Nachbehandlung zugeführt werden.

Weitere Merkmale der Erfindung ergeben sich aus den Merkmalen der Unteransprüche sowie den sonstigen Anmeldungsunterlagen.

Die Erfindung wird nachstehend näher beschrieben. Die in der Anlage beigefügte schematische Zeichnung zeigt eine mögliche Konstruktion der erfindungsgemäßen Vorrichtung, und zwar in:

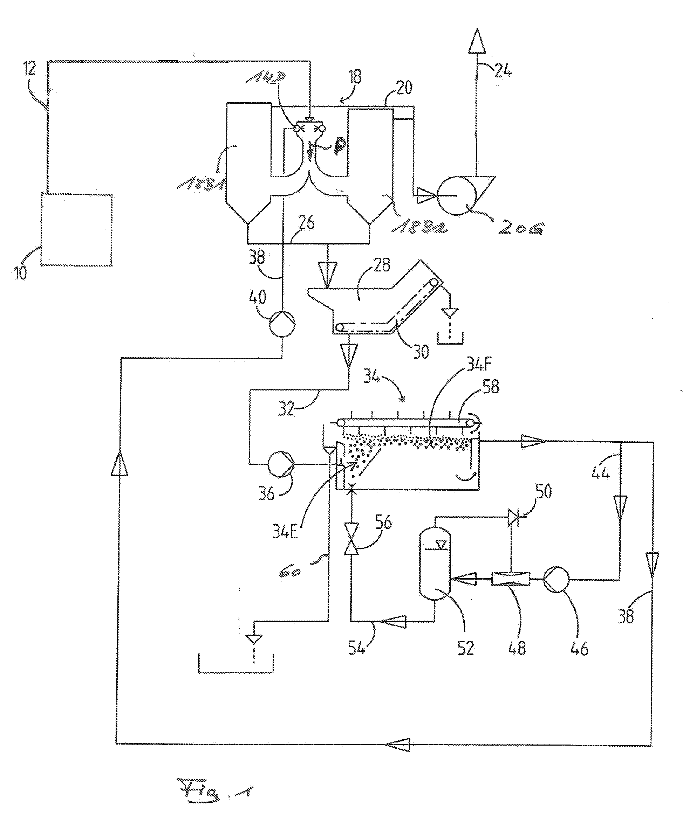

Fig. 1: ein Anlagenschema der Gesamtvorrichtung
Fig. 2: eine Ausführungsform einer Nassentstaubungsanlage

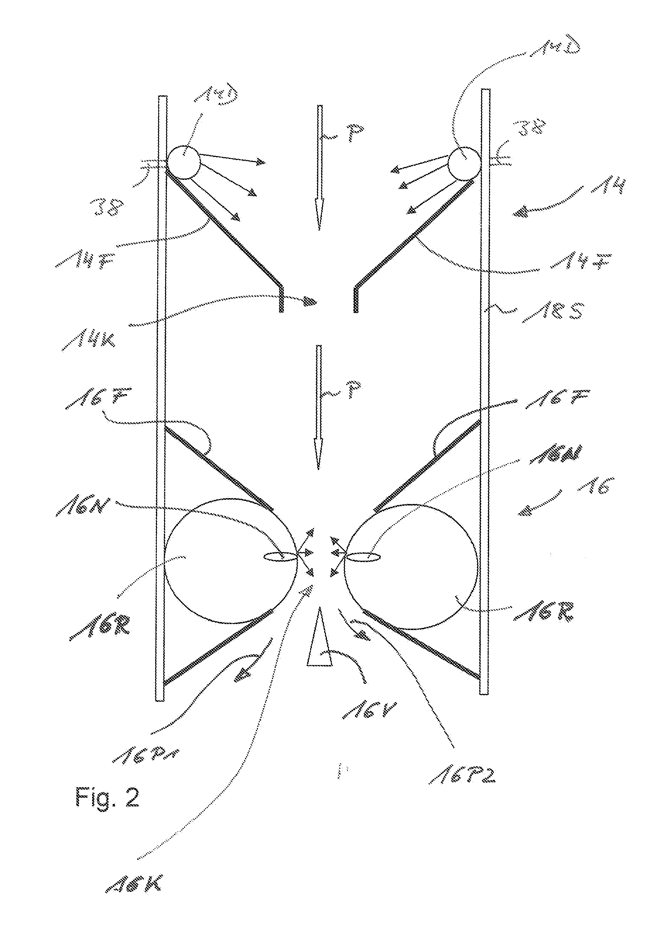

Mit dem Bezugszeichen 10 ist eine industrielle Zerkleinerungsvorrichtung, hier ein Schredder für Metallschrott, gekennzeichnet. Vom Schredder 10 verläuft eine Abluftleitung 12 zu einer Nassentstaubungsanlage 18, die als 2-stufiger Venturi-Wäscher ausgeführt ist. Dieser Teil der Anlage 18 ist in Fig. 2 schematisch dargestellt. Die Strömungsrichtung der Abluft (von oben nach unten) ist mit den Pfeilen P gekennzeichnet.

Die Abluft durchläuft einen Strömungskanal 18S mit einer ersten Venturi-Stufe 14 und einer nachfolgenden zweiten Venturistufe 16.

Der Luftstrom wird entlang des Strömungskanals 18S in der ersten Venturi-Stufe 14 über Führungsbleche 14F zu einer Venturikehle 14K geführt und dabei beschieunigt. Die Führungsbleche 14F verlaufen im dargestellten Längsschnitt konisch aufeinander zu. Über eine Leitung 38 und Düsen 14D wird eine Waschflüssigkeit in Form kleiner Flüssiekeitstropfen in den Abluftstrom gedüst.

Beim Durchlaufen der ersten Venturi-Stufe (Venturi-Düse) 14 werden die Flüssigkeitstropfen aufgrund der hohen Luft-Strömungsgeschwindigkeit zerrissen, so dass sich eine aerosolförmige Aufbereitung ergibt. Die hohe Beschleunigung der Abluft entlang der Venturi-Düse 14 und die daraus resultierende hohe Relativgeschwindigkeit zwischen den Schadstoffen der Abluft und der Waschflüssigkeit sorgen für eine erste effektive Abscheidung von Fremdstoffen aus der Abluft und Anlagerung an die Waschflüssigkeit, (auch Absorbens genannt).

Die so vorgereinigte Abluft wird anschließend durch die zweite Venturistufe 16 geleitet. Diese ist etwas anders aufgebaut als die Stufe 14. Der Bereich der Venturikehle 16K wird zwischen zwei Rohren 16R gebildet, die an gegenüberliegenden Wandflächen des Strömungskanals 18S verlaufen. Über düsenförmige Öffnungen 16N in jedem Rohr 16R wird frische Waschflüssigkeit in den Abluftstrom gedüst. Die Abluft wird über Führungsflächen 16F, ähnlich den Führungsflächen 14F, auf dem Weg Zur Kehle 16K beschleunigt und hinter der Kehle 16K durch einen stabförmigen Verdrängungskörper 16V in zwei Teilströme getrennt (siehe Pfeile 16P1 und 16P2). Durch Veränderung der Position des Verdrängungskörpers 16V können die korrespondierenden Spaltbreiten und damit die Strömungsgeschwindigkeit der Abluft eingestellt werden, bevor diese anschließend in nachgeschaltete Behälter 18B1, 18B2 strömt. Im Übrigen entspricht die Verfahrenstechnik der Venturistufe 16 der der Stufe 14. Durch die Nachreinigung in der 2. Verfahrensstufe 16 ergibt sich ein hervorragender Reinigungsgrad für die Abluft.

Während die gereinigte Abluft am oberen Ende der Behälter 18B1, 18B2 über eine Leitung 20 mit Hilfe eines Gebläses 20G zu einem Kamin 24 und von dort in die Atmosphäre freigegeben wird, wird die verbrauchte Waschflüssigkeit jeweils unten an den Behältern 18B1 und 18B2 abgezogen und in ein Sedimentationsbecken geführt. Das Sedimentationsbecken ist fakultativ. Das Waschwasser kann auch direkt vollständig zur Anlage 34 zur Druckentspannungsflotation geführt werden oder (nur) ein Teilstrom des Waschwassers wird über einen Bypass zunächst in die Sedimentationsstufe 28 und danach zur Anlage 34 geleitet, die nachstehend noch näher beschrieben wird.

Ein im Sedimentationsbecken (Absetztank) 28 gebildetes Sediment (Schlamm) wird über eine mechanische Fördereinrichtung 30 aus dem Sedimentationsbecken 28 ausgetragen.

Aus dem Bereich des Sedimentationsbeckens 28, in dem sich die insoweit vorgereinigte Waschflüssigkeit befindet, verläuft eine Flüssigkeitsleitung 32 zum Einlaufbereich 34E der Anlage 34 zur Druckentspannungsflotation, wobei der Transport der Flüssigkeit über eine entsprechende Pumpe 36 erfolgt.

Mit 38 ist eine Leitung für Flotatwasser gekennzeichnet, die gegenüber dem Einlaufbereich 34E aus der Anlage 34 wegführt und das Flotatwasser mit Hilfe einer Pumpe 40 zurück zur Nassentstaubungsanlage 18 führt, wo das Flotatwasser über die Düsen 14D (Sprüheinrichtungen) in die Abluft eingedüst wird.

Von der Leitung 38 verläuft eine Abzweigung 44 zu einer Druckwasserpumpe 46, an die sich strömungstechnisch ein Ejektor 48 anschließt, in den eine Druckluftleitung 50 mündet.

Vom Ejektor 48 verläuft das Flotatwasser in einen Druckwasserbehälter 52 und wird dort mit Luft gesättigt. Es gelangt von dort über eine weitere Druckwasserleitung 54 zu einem Entspannungsventil 56, von dem aus sich die Druckwasserleitung 54 in die Einlaufkammer 34E der Anlage 34 erstreckt. Diese Einlaufkammer 34E bildet eine Kontakt- und Mischzone zwischen dem zugeführten Flotatwasser und dem aus den Sedimentationsbecken 28 stammenden vorgereinigten Waschwasser.

In der Kontakt- und Mischzone erfolgt die entscheidende weitere Aufbereitung des Waschwassers.

Durch die Entspannung auf Umgebungsdruck im Entspannungsventil 56 wird die zuvor gelöste Luft in Form sehr kleiner Luftblasen frei. Diese kleinsten Luftbläschen (Durchmesser im µm-Bereich) sind in der Lage, sich an die festen, flüssigen und gasförmigen Kohlenwasserstoffe, die nach der Vorreinigung noch im Waschwasser enthalten sind, anzulagern und mit diesen aufzuschwimmen.

Es bilden sich dabei Agglomerate (Ansammlungen) von festen, flüssigen und gasförmigen Fremdbestandteilen (inklusive Schadstoffen), die von der Kontakt- und Mischzone anschließend in die strömungstechnisch folgende Flotationszone 34F gelangen und sich überwiegend als Agglomerat im Oberflächenbereich des Flotatwassers ansammeln.

Dieses Agglomerat wird über eine mechanische Einrichtung (hier: ein Flotat-Schlammräumer 58) über einen Sammelkanal 60 aus dem Flotationsbecken weggeführt.

Schwebstoffteile mit einer höheren Dichte als Wasser sinken als Sediment an den Boden der Flotationseinrichtung 34 und können dort über einen (nicht dargestellten) Schlammräumer mechanisch entfernt oder abgesaugt werden, und zwar entweder kontinuierlich oder diskontinuierlich.

Das verbleibende, nunmehr weitestgehend von festen, flüssigen und gasförmigen Fremd-und Schadstoffen befreite Flotatwasser, wird, wie bereits erläutert, an dem der Kontakt- und Mischzone gegenüberliegenden Ende der Anlage 34 entnommen und über die Flotations-Wasserleitung 38 zur Nassentstaubungsanlage 18 zurückgeführt.

Die in der zweiten Venturi-Stufe 1 6 verwendete Flüssigkeit kann auch Flotatwasser enthalten. Es hat jedoch verfahrenstechnische Vorteile, hier zumindest anteilig Frischwasser beziehungsweise eine frisches Absorbens zu verwenden.

Die erfindungsgemäße Vorrichtung erlaubt nicht nur eine optimierte Entfernung von festen Fremdstoffen (wie Staub) aus der Abluft, sondern auch eine sehr weitgehende Elimination von bisher nicht erfassbaren Kohlenwasserstoffen und anderen flüssigen und gasförmigen Schadstoffen in der Abluft der Schredderanlage. Dabei konnten Reinigungswerte bezüglich dieser Schadstoffe von deutlich mehr als 70% (beispielsweise 85 %) in Vorversuchen erzielt werden.

Die Vorrichtung umfasst schließlich auch noch eine Einrichtung zur Absaugung von Abluft aus der Anlage 34 zur Druckentspannungsflotation (nicht dargestellt).

## Patentansprüche

1. Vorrichtung zur Reinigung von Abluft aus industriellen Shredderanlagen, mit folgenden Merkmalen:
1.1 einer Nassentstaubungsanlage (18) zur Kontaktierung der mit Schadstoffen beladenen Abluft mit einer Waschflüssigkeit,
1.2 einer Anlage (34) zur Druckentspannungsflotation,
1.3 einer Einrichtung (26) zur Überleitung der aus der Nassentstaubungsanlage (18) anfallenden, verbrauchten Waschflüssigkeit in die Anlage (34) zur Druckentspannungsflotation.

2. Vorrichtung nach Anspruch 1, bei der die Nassentstaubungsanlage (18) einen Venturiwäscher enthält.

3. Vorrichtung nach Anspruch 1, bei der die Nassentstaubungsanlage (18) einen Venturiwäscher mit zwei, hintereinander geschalteten Venturi-Stufen (14,16) enthält.

4. Vorrichtung gemäß Anspruch 1 mit einer Flüssigkeitsleitung (38), die Flotatwasser aus der Anlage (34) zur Druckentspannungsflotation als Waschflüssigkeit zurück zur Nassentstaubungsanlage (18) führt.

5. Vorrichtung nach Anspruch 1 mit mindestens einer Sprühvorrichtung (14D, 16N) zum Eindüsen der Waschflüssigkeit in die Nassentstatibungsanlage (18).

6. Vorrichtung nach Anspruch 2, bei der mindestens eine Sprühvorrichtung (14D, 16N) vor und/oder entlang mindestens einer Venturistufe (14,16) so angeordnet ist, dass die Waschflüssigkeit unmittelbar vor und/oder entlang der zugehörigen Venturi-Stufe (14,16) in die Abluft geleitet wird.

7. Vorrichtung nach Anspruch 1, deren Anlage (34) zur Druckentspannungsfiotation eine mechanische Einrichtung (58) zur Entfernung eines auf der Waschflüssigkeit aufschwimmenden Agglomerates aufweist.

8. Vorrichtung nach Anspruch 1 mit einem Sedimentationsbecken (28), das strömungstechnisch zwischen der Nassentstaubungsanlage (18) und der Anlage (34) zur Druckentspannungsflotation angeordnet ist.

9. Vorrichtung nach Anspruch 1 oder 9, mit mindestens einer Einrichtung (30) zur Entfernung von schlammförmigen Bestandteilen aus dem Sedimentationsbecken (28) und/oder der Anlage (34) zur Druckentspannungsflotation.

10. Vorrichtung nach Anspruch 1 mit einer Einrichtung (20,22,24) zur Abführung von Abluft aus der Nassentstaubungsanlage (18).
